# EUROPEAN PATENT APPLICATION

(11) **EP 3 808 532 A1**
(43) Date of publication of application: **21.04.2021**
(21) Application number: 19209489.4
(22) Date of filing: 15.11.2019
(51) Int. Cl.: B29C 48/40, B29C 67/24, C08G 18/08, C08G 18/10, C08G 18/12, C08G 18/32, C08G 18/42, C08G 18/48, C08G 18/76, C08J 3/00

(54) **RECYCLING OF CAST POLYURETHANE**

(30) Priority: 15.10.2019 US 201962915239 P
(71) Applicant: LANXESS Corporation, Pittsburgh, PA 15275-1112 (US)
(72) Inventor: YUAN, Tingting, Cheshire, Connecticut CT 06410 (US); BURDZY, Matthew P., South Windsor, Connecticut CT 06074 (US); ZHU, Zhenya, New Milford, CT 06776 (US); HE, Qingliang, Cheshire, CT 06410 (US); WARE, Polina, Southington, Connecticut 06489 (US); KING, Gerald, Waterside, Londonderry 47 6SY (GB)
(74) Representative: Wichmann, Birgid

(57) **Abstract**

The invention relates to a process for producing thermoplastic polyurethane (TPU) based on recycled cast polyurethane comprising the steps of (a) pelletizing cast polyurethane to cast polyurethane pellets with an average size of 1 to 8 mm, optionally mixing thermoplastic polyurethanes with the cast polyurethane pellets of step (a) to form a mixture, (b) heating the cast polyurethane pellets of step (a) and (c) forming an article, wherein the cast polyurethane is the reaction product of a polyurethane prepolymer and a curative, wherein the polyurethane prepolymer is the reaction product of the reaction of a diisocyanates and a polyol, and wherein the curative is a polyol and thermoplastic polyurethane made according to this process.

## Description

### FIELD OF THE DISCLOSURE

The invention relates to a process for producing thermoplastic polyurethane (TPU) based on recycled cast polyurethane comprising the steps of (a) pelletizing cast polyurethane to cast polyurethane pellets with an average size of 1 to 8 mm, optionally mixing thermoplastic polyurethanes with the cast polyurethane pellets of step (a) to form a mixture, (b) heating the cast polyurethane pellets of step (a) and (c) forming an article, wherein the cast polyurethane is the reaction product of a polyurethane prepolymer and a curative, wherein the polyurethane prepolymer is the reaction product of the reaction of a diisocyanates and a polyol, and wherein the curative is a polyol and thermoplastic polyurethane made according to this process.

### BACKGROUND OF THE INVENTION

Plastic waste, including polyurethane (PU) waste, is a major problem of human mankind. During the production of PU articles, massive amounts of residues and scrap are produced which have to be dumped at the landfill which is a burden for the economy and ecology. Also after use, most of the PU materials end up at waste dumps.

The recycling of polyurethane has always posed unique challenges due to its wide variety of applications. Polyurethane is typically provided in different forms, including thermoplastic polyurethanes (TPU), cast polyurethanes (CPU) and polyurethane foam (PU foam).

Thermoplastic polyurethanes (TPU) are widely used in the industry for the production of various articles, such as timing belts. TPU is generated in one step to form a fully reacted polyurethane usually in a pellet form. For TPU, the MDI, polyol, and diol curative are reacted together, e.g. by reactive extrusion. The hardness is controlled by varying the ratios of the three components. Nearly all TPU is MDI based while no TDI is used (see PMA Technical Paper 2017 R.S. Archibald et al.).

Cast polyurethanes (CPU), which are known to be thermoset instead of thermoplastic, are used e.g. for tires and wheels, mining and construction applications. Thermoset CPU cannot be melted. Cast polyurethane is part of the thermoset class whereby the resin is first formed into the final shape before a non-reversible chemical process cures the resin into its final shape. These thermosetting products form permanent chemical bonds or cross links with each other once heated. Cast urethane as a thermoset resin is similar to rubber and epoxy resins (see PMA Technical Paper 2017 R.S. Archibald et al.).

Polyurethane foam (PU foam) is the PU product produced in the highest volume, therefore, most recycling efforts have focused in the past on PU foam. PU foams are based on diisocyanates, such as MDI, polyols and additives, such as surfactants, catalysts, blowing agents and fire retardants.

Various methods and technologies exist and had been developed in the past for the recycling of many, but unfortunately not all, polyurethane products. The techniques can be divided in chemical and mechanical recycling.

A chemical recycling process changes the molecular structure of the polyurethane and enables the recovery of valuable polyols. Such a chemical recycling can be done via hydrolysis, glycolysis, phosphorolysis, alcoholysis, acidolysis, solvolysis or aminolysis.

Hydrolysis creates a reaction between used polyurethanes and water, resulting in polyols and various intermediate chemicals. The polyols can be used as fuel and the intermediates as raw materials for polyurethane. Glycolysis combines mixed industrial and post-consumer polyurethanes with diols at high heat, causing a chemical reaction that creates new polyols, a raw material used to make polyurethanes. These polyols can retain the properties and functionality of the original polyols and can be used in myriad applications.

US-A-2003134917 discloses a method of recycling rigid polyurethane foams. The method includes recovering highly purified rigid polyurethane foam from a scrapped refrigerator, and decomposing the rigid polyurethane foam for recycling. The method includes steps of: shredding a scrapped refrigerator containing rigid polyurethane foam in order to separate rigid polyurethane foam lumps; grinding the rigid polyurethane foam lumps into a rigid polyurethane foam powder; liquefying the rigid polyurethane foam powder by either aminolysis reaction or glycolysis reaction; reacting thus obtained liquefied rigid polyurethane foam powder and supercritical/sub-critical water in order to decompose the rigid polyurethane foam powder into a crude material; and fractionating the crude material to obtain a raw material of rigid polyurethane foam.

Other forms of chemical recycling are e.g. pyrolysis and hydrogenation.

Pyrolysis breaks down polyurethanes under an oxygen free environment to create gas and oils. Hydrogenation creates gas and oil from used polyurethanes through a combination of heat and pressure and hydrogen.

As a physical or mechanical recycling, molded polyurethane products can be made from pieces of chopped flexible polyurethane foam ("Rebonding"). Such rebounded products are used e.g. to produce carpet undelays and sport mats.

In another mechanical recycling method, polyurethane waste is ground into fine particulate and used as filler ("Regrind", "Powdering", "Pulverizing", or "Comminuting")).

In a third mechanical recycling method, thermoplastic polyurethane (TPU waste), which can be melted, is ground and added to "virgin" thermoplastic polyurethane for a subsequent melt process, e.g. extrusion or injection molding ("Remelt"). Up to 50% recycled thermoplastic polyurethane is can be used in new thermoplastic polyurethane articles.

PU foams are not remeltable and, therefore, PU foams are typically recycled using regrind filler, rebounded foam or chemical recycling methods.

US-B-6,299,811 discloses a method for recycling polyurethane foam, whereas the foam is formed into a fluff of pellets sized 0.25-1.0 inch. The material is moved to a mold and molded at an elevated temperature and pressure. The invention recycles scrap which includes polyurethane foam and reduces the complexity of re-utilizing the scrap.

US-A-5,525,278 discloses method of recycling used rigid polyurethane foam, whereas the material is first dried to a moisture content of 2 to 4%, comminuted to <10 mm and mixed with a binder.

Thermoplastic polyurethanes are typically recycled by being melted into new products, e.g. via injection molding.

WO-A-2019/030071 discloses a method of forming an isocyanate-functional polymer component, the method comprising forming a first mixture by mixing a recycled polyurethane article in solid form and a first isocyanate component having isocyanate-functional groups; heating the first mixture to a temperature sufficient to transform the recycled polyurethane article in solid form to a recycled polyurethane article in liquid form; and reacting the recycled polyurethane component in the liquid form with the first isocyanate component at the temperature for a time sufficient to form the isocyanate-functional polymer component, wherein the isocyanate-functional group content (NCO content) of the isocyanate-functional polymer component is greater than zero and is less than an NCO content of the first isocyanate component.

However, efficient recycling of CPU remains to be problematic.

One attempt for recycling CPU is to regrind the CPU to filler with a size in the range of 1-3 mm which can be than added up to 35% of the weight of the final article (see J.Swafford et al, PMA 2016 Technical Paper #352).

In Polimery, 2002, Vol.47, No.4, p.273-278, a method for recycling ground polyurethane thermosetting resin waste is disclosed.

While the prior art has identified many methods for recycling of polyurethane articles, there remains new opportunities for the recycling of cast polyurethane articles that are cost effective and efficient. In addition, more research efforts are required in order to scale up the recycling methods for cast polyurethane elastomers.

It was surprisingly found that certain recycled cast polyurethanes, based on polyol cured polyurethane prepolymers, can be used in a process to provide thermoplastic polyurethanes (TPU). TPU, comprising certain amount of such recycled cast polyurethanes, show a comparable set of properties as thermoplastic polyurethane without cast polyurethanes.

### SUMMARY OF THE INVENTION

The technical problem is solved by a process, comprising the steps of:
(a) pelletizing recycled cast polyurethane to cast polyurethane pellets with an average size of 1 to 8 mm,
(b) heating the cast polyurethane pellets of step (a) and
(c) forming an article,
wherein the recycled cast polyurethane is the reaction product of a polyurethane prepolymer and a curative,
wherein the polyurethane prepolymer is the reaction product of the reaction of a diisocyanates and a polyol, and
wherein the curative is a polyol.

In a preferred embodiment, the cast polyurethane pellets of step (a) are mixed with thermoplastic polyurethane to form a mixture, before the mixture is heated.

### DETAILED DESCRIPTION

### General definition

In the context of the present invention the following terms have the following meaning:
The term "recycled", as used hereinafter in the phrase "recycled cast polyurethane", refers in general to the use of previously-formed ("pre-formed") polyurethane objects or materials. In other words, any previously formed cast polyurethane object, formed in a casting process, may be used, including those that were used for the prior intended purpose or were otherwise not used for any intended purpose (i.e., such as scrap or unused commercial cast polyurethane products and the like). In other words, the only requirement is for the polyurethane article to be considered a "recycled cast polyurethane" as used herein is that it was a pre-formed polyurethane object or material, formed in a casting process, and is now available for use in the subject disclosure. "Virgin cast polyurethane" in contrast is cast polyurethane which was not a pre-formed object (e.g. freshly casted polyurethane based on polyurethane prepolymers). "Virgin TPU" is a thermoplastic urethane, typically available as a pellet, which was not a pre-formed object.

The term "polyurethane" or "polyurethane polymer" means a polymer having more than one urethane (-N(H)-C(O)-) bond.

It is well understood in the art that a polyurethane prepolymer generally contains, in addition to any particular polyurethane prepolymer compound, other compounds, typically in small amounts. Thus, there should be no confusion when a "polyurethane prepolymer" is said to contain more than a single polyurethane prepolymer molecule, such as other analogous polyurethane prepolymers, unreacted starting materials, side products, solvents, etc.

The article "a", "an" and "the" as used herein, means one or more than one (e.g. include the plural form), unless the context specifically states otherwise.

The terms "comprising", "comprises" and "comprised of" as used herein are synonymous with "including", "includes" or "containing", "contains", and are inclusive or open-ended and do not exclude additional, non-recited members, elements or process steps.

Any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein.

All ranges recited are inclusive and combinable.

The term "embodiment" or "disclosure", as used herein, unless otherwise indicated, is not meant to be limiting, but applies generally to any of the embodiments defined in the claims or described herein. These terms are used interchangeably herein.

It is to be appreciated that certain features of the disclosure, which are, for clarity, described above and below in the context of separate embodiments, may also be provided in combination in a single element. Conversely, various features of the disclosure that are, for brevity, described in the context of a single embodiment, may also be provided separately or in any subcombination.

The term "ASTM", as used herein, unless otherwise indicated, refers to publications of ASTM International, West Conshohocken, PA.

All industry standards and norms mentioned in the document refer to the version valid at the time of filing the first application.

Unless otherwise indicated, conditions of temperature and pressure are ambient or room temperature and atmospheric (=standard) pressure (101,325 Pa).

The term "room temperature" (R.T.) refers to a temperature of 23ºC ± 2ºC.

The terms "percent by weight", "weight percentage (wt%)" and "weight-weight percentage (% w/w)", as used herein, are used interchangeably herein. Percent by weight refers to the percentage of a material on a mass basis as it is comprised in a composition, mixture or solution.

The % NCO or NCO-value is defined as the percent by weight of NCO-groups present in the product.

The abbreviation "MDI" means diphenylmethane diisocyanate, polymeric MDI, carbodiimide-modified liquid MDI, and combinations thereof

The abbreviation "1,4-BD" means 1,4-butanediol.

The abbreviation "HQEE" means hydroquinone bis (2-hydroxyethyl) ether.

### Recycled Cast Polyurethane

Recycled cast polyurethane of the present invention is the reaction product of a polyurethane prepolymer and a curative, wherein the polyurethane prepolymer is the reaction product of the reaction of a diisocyanate and a polyol, and wherein the curative is a polyol.

The recycled cast polyurethane of the present invention is not a polyurethane foam.

### Diisocyanate

The diisocyanate of the process of the present invention is not particularly limited and is defined as a molecule having two isocyanate (NC)) groups including blocked diisocyanates.

Suitable diisocyanates of the present invention include aliphatic diisocyanates, cycloaliphatic diisocyanates, polycyclic diisocyanates, aromatic diisocyanates and aliphatic-aromatic diisocyanates.

Suitable aromatic diisocyanates of the present invention include diphenylmethane diisocyanate (MDI), toluene diisocyanate (TDI), para-phenylene diisocyanate (pPDI), toluidine diisocyanate (TODI), diphenyl diisocyanate (DPDI), dibenzyl diisocyanate, naphthalene diisocyanate (NDI), anthracene diisocyanate, benzophenone diisocyanate, xylene diisocyanate (XDI), and combinations thereof.

Preferred aromatic diisocyanate monomers suitable in the practice of the present invention include 2,4'- and 4,4'-methylene-bis-(phenyl isocyanate), 2,2-diphenylpropane-4,4'-diisocyanate, toluene-2,4-diisocyanate (2,4-TDI; CAS: 584-84-9), toluene-2,6-diisocyanate (2,6-TDI; CAS: 91-08-7), tolidene diisocyanate, naphthalene-1,4-diisocyanate, naphthalene-1,5-diisocyanate, stilbene-4,4'-diisocyanate, diphenyl-4,4'-diisocyanate, benzophenone-4,4'-diisocyanate, 1,3- and 1,4-xylene diisocyanates, para-tetramethylxylene diisocyanate (p-TMXDI), metatetramethylxylene diisocyanate (m-TMXDI), and combinations thereof.

Suitable aliphatic and cycloaliphatic diisocyanates of the present invention include ethylene diisocyanate, ethylidene diisocyanate, propylene diisocyanate, butylene diisocyanate, trimethylene diisocyanate, hexamethylene diisocyanates (HDI), tetracene diisocyanate, isophorone diisocyanate (IPDI), cyclohexyl diisocyanates (CHDI), 2,4,4-trimethyl-1,6-hexane diisocyanate (TMDI), Methylene bis(p-cyclohexyl isocyanate) (H12MDI), L-lysine ethyl ester diisocyanate (LDI), methylene biscyclohexyl isocyanates, bis(isocyanatocyclohexyl)cyclohexane, bis(isocyanatocyclohexyl)methane, bis(isocyanatocyclohexyl)-2,2-propane, bis(isocyanatocyclohexyl)-1,2-ethane, 2-isocyanatomethyl-3-(3-isocyanatopropyl)-5-isocyanatomethyl-bicyclo[2.2.1]-heptane, 2-isocyanatomethyl-3-(3-isocyanatopropyl)-6-isocyanatomethyl-bicyclo[2.2.1]-heptane, 2-isocyanatomethyl-2-(3-isocyanatopropyl)-5-isocyanatomethyl-bicyclo[2.2.1]-heptane, 2-isocyanatomethyl-2-(3-isocyanatopropyl)-6-isocyanatomethyl-bicyclo[2.2.1]-heptane, 2-isocyanatomethyl-3-(3-isocyanatopropyl)-6-(2-isocyanatoethyl)-bicyclo[2.2.1]-heptane, 2-isocyanatomethyl-2-(3-isocyanatopropyl)-5-(2-isocyanatoethyl)-bicyclo[2.2.1]-heptane, 2-isocyanatomethyl-2-(3-isocyanatopropyl)-6-(2-isocyanatoethyl)-bicyclo[2.2.1]-heptane, and combinations thereof.

Preferred aliphatic diisocyanate monomer suitable in the practice of the present invention include 1,3-trimethylene diisocyanate, propylene-1,2-diisocyanate, tetramethylene-1,4-diisocyanate, 1,6-hexamethylene diisocyanate, 2,2,4-trimethylhevamethylene diisocyanate, 2,4,4-trimethylheyamethylene diisocyanate, 1,9-nonamethylene diisocyanate, 1,10-decamethylene diisocyanate, dodecane-1,12-diisocyanate, isophorone diisocyanate, cyclobutane-1,3-diisocyanate, 1,3-cyclopentyl diisocyanate, 1,2'-, 1,3'- and 1,4'-cyclohexyl diisocyanate, 4,4'-dicyclohexylmethane diisocyanate, 2,2'-diethylether diisocyanate, 1-isocyanato-3,3,5-trimethyl-5-isocyanatomethylcyclohexane; the three geometric isomers of 1,1'-methylene-bis(4-isocyanatocyclohexane), and combinations thereof.

In one embodiment of the present invention, the diisocyanate is selected from a group consisting of diphenylmethane diisocyanate, phenylene diisocyanate, toluene diisocyanate, hexamethylene diisocyanates, isophorone diisocyanate, xylene diisocyanate and naphthalene diisocyanate.

In a more preferred embodiment of the present invention, the diisocyanate is selected from a group consisting of diphenylmethane diisocyanate, para-phenylene diisocyanate, toluene diisocyanate and hexamethylene diisocyanates.

In an even more preferred embodiment of the present invention, the diisocyanate is selected from a group consisting of diphenylmethane diisocyanate and para-phenylene diisocyanate.

In the most preferred embodiment of the present invention, the diisocyanate is 4,4'-MDI.

### Polyol

The present invention is not limited by the use of a particular polyol in the claimed composition. Such polyols are well known in the art and more than one may be used.

A polyol suitable the present invention used in the preparation of the present polyurethane prepolymer may be selected from any polyol known in the art. Polyols include compounds having more than one hydroxyl groups. Thus, polyols suitable for the present invention comprise diols, triols, and/or higher average hydroxyl functionality. The average hydroxyl functionality can range from 2 to 8, preferably 2 to 3 and more preferably from 2 to 2.5. The formation of such polyols is well known in the art.

In some embodiments, the polyol is a combination of a diol and a triol. In many embodiments, diols are preferred over triols or polyols with higher hydroxyl functionality.

In some embodiments of the present invention, the polyol comprises at least one polyether polyol, at least one polyester polyol, at least one polycaprolactone polyol, at least one polycarbonate polyol, or combinations thereof.

The term "polyester polyol" as used herein means a polyol having ester linkages. A polyester polyol suitable for the present invention for making a polyurethane prepolymer is a polyol having a backbone derived mainly from a polycarboxylate and a poly alcohol. The hydrocarbon chain of the polyol can have saturated or unsaturated bonds, or substituted or unsubstituted aromatic and cyclic groups and can be either linear or branched. Some polyester polyols also employ caprolactone and dimerized unsaturated fatty acids in their manufacture.

Suitable examples of polyester polyols include poly(adipate) glycol, poly(hexamethylene adipate) glycol, poly(ethylene adipate) glycol (PEAG), poly(diethylene adipate) glycol, poly(ethylene/propylene adipate) glycol, poly(trimethylolpropane/hexamethylene adipate) glycol, poly(ethylene/butylene adipate) glycol, poly(butylene adipate) glycol, poly(hexamethylene/neopentyl adipate) glycol, poly(butylene/hexamethylene adipate) glycol (PBHAG), poly(neopentyl adipate) glycol, ortho-phthalate-1,6-hexanediol, and combinations, copolymers (including block and random copolymers) and terpolymers thereof.

These polyester polyols are prepared by conventional methods using a combination of diacids (dibasic acids) and polyols that are known in the art.

The term "polyether polyol" as used herein means a polyalkylene ether polyol represented by the general formula HO(RO)ₙH, wherein R is an alkylene radical and n is an integer large enough that the polyether polyol has a number average molecular weight of at least 250 g/mol. These polyalkylene ether polyols are well-known components of polyurethane products and can be prepared by the polymerization of cyclic ethers such as alkylene oxides and glycols, dihydroxyethers, and the like by known methods.

In one embodiment, polyether polyols include polyethylene glycol (PPG), polypropylene glycol (PPG), polyhexamethylene glycol (PHMG), polyoctamethylene glycol (POMG), polyceamethylene glycol (PDMG), copolymers from propylene oxide and ethylene oxide (PPG-EO glycol), poly(tetramethylene ether) glycol (PTMEG or PTMG; also known as polytetrahydrofuran (PTHF)), mixed ether diols, such as poly ethylene propylene glycol copolymer diols, and the like.

A polycaprolactone polyol suitable for the present invention for making a polyurethane prepolymer is a polyol having a backbone derived mainly from a hydroxycarboxylic acid or lactone. Suitable polylactone polyols include those made by polycondensation of, e.g., a caprolactone such as ε-caprolactone, and the like, often initiated by a small polyol such as ethylene glycol.

In one embodiment, polycaprolactone polyols include, but are not limited to, 1,6-hexanediol-initiated polycaprolactone, diethylene glycol initiated polycaprolactone, trimethylol propane initiated polycaprolactone, neopentyl glycol initiated polycaprolactone, 1,4-butanediol-initiated polycaprolactone, and combinations thereof.

A polycarbonate polyol suitable for the present invention for making a polyurethane prepolymer is a polyol having a backbone comprising mainly carbonate linkages, -O-(CO)-O-. Polycarbonate polyols can be prepared by reaction of glycols with organic carbonates, e.g., diphenyl carbonate, diethyl carbonate, or ethylene carbonate and the like. Thus, suitable polyols of the present invention are poly(hexamethylene carbonate) (PHMC) diol or Poly(1,6-hexyl-1,2-ethyl carbonate) (PHEC) diol.

The polyol of the present invention has a number average molecular weight of 100 g/mol to 10,000 g/mol, 200 g/mol to 6,000 g/mol 300 g/mol to 3,000 g/mol or 400 g/mol to 1,000 g/mol. In this context, molecular weight refers to the number average molecular weight in Daltons which as used herein is calculated via hydroxyl number measurement by ASTM E222-94 method.

### Prepolymer

There is no particular restriction on the polyurethane prepolymer, or combination of polyurethane prepolymers, that can be used in the present invention, nor is there a particular restriction on the polyols or diisocyanate monomers that can be used in the preparation of the polyurethane prepolymer. Obviously, no attempt is made here to provide an exhaustive list of possible polyurethane prepolymers suitable for the practice of the process of the present invention.

The exact diisocyanate monomers and polyols used to prepare the polyurethane prepolymer of the present invention will vary depending on the end use of the final product.

In some embodiments, polyurethane prepolymers prepared from aromatic diisocyanates such as MDI, PPDI, NDI and the like will be preferred.

In some embodiments polyurethane prepolymers prepared from aliphatic diisocyanates such as HDI, H₁₂MDI, CHDI and the like will be preferred.

In a preferred embodiment, the polyurethane prepolymer is based on the diisocyanates 4,4'-MDI and the polyol PEAG.

Preferred recycled cast polyurethanes are MDI/Ether polyurethane prepolymers cured with 1,4-BD, MDI/Ester polyurethane prepolymers cured with 1,4-BD, MDI/Ether polyurethane prepolymers cured with HQEE, LF MDI/PC polyurethane prepolymers cured with HQEE, LF pPDI/PC polyurethane prepolymers cured with HQEE, LF pPDI/Ether polyurethane prepolymers cured with 1,4-BD, LF PPDI/Ether polyurethane prepolymers cured with HQEE and LF HDI/Ether polyurethane prepolymers cured with 1,4-BD.

### Low free prepolymer (LF)

The polyurethane prepolymer of the present invention may be "low free monomer" (also known as "low free" or "LF").

Understood by one of ordinary skill in the art to have lower amounts of "free" monomer isocyanate groups than conventional polyurethane prepolymers, i.e. the polyurethane prepolymer (compositions) of the present invention typically have less than 0.1 wt% free diisocyanate monomers based on the total weight of the polyurethane prepolymer.

Examples of "low free monomer" diisocyanates include, but are not limited to low free monomer MDI, low free monomer PPDI and low free HDI.

In preferred embodiments of the present invention, the amount of free diisocyanate in the prepolymer mixture is at a reduced level, e.g., less than 10 wt%, and in more preferred embodiments, the polyurethane prepolymer is a low free diisocyanate polyurethane prepolymer having free diisocyanate amounts of less than 5 wt%, preferably less than 3 wt%, more preferably less than 1 wt%, even more preferably less than 0.5 wt% and most preferably less than 0.1 wt%, based on the total weight of the prepolymer. Such low free monomer prepolymers and methods for their preparation are also known in the art. LF prepolymers are commercially available under the tradename Adiprene® LFM at LANXESS.

### Curative

The curative of the present invention is a polyol such as a diol or triol. In a preferred embodiment, the curative is a diol. To avoid any doubts, the curative is no diamine.

Polyol curatives are well known in the art. In a preferred embodiment, the curative is 1,4-BD (1,4-butanediol) or HQEE (hydroquinone bis (2-hydroxyethyl) ether), commercially available as Vibracure® 2101 at LANXESS.

In another embodiment, the curative is an aromatic diol such as Vibracure® A263 or Vibracure® A 260, commercially available at LANXESS.

In a preferred embodiment, the recycled cast polyurethane is made in a stoichiometry of 85 to 100%.

### Thermoplastic Urethane (TPU)

Thermoplastic urethanes of the present invention are typically made of diisocyanates, diols, a curative and various processing agents.

The thermoplastic polyurethane in the optional mixing step can be a virgin thermoplastic polyurethane or a recycled thermoplastic polyurethane.

The thermoplastic polyurethane in the optional mixing step is based on the same or different diisocyanates as the recycled cast polyurethane in step (a).

The thermoplastic polyurethane in the optional mixing step is based on the same or different polyols as the recycled cast polyurethane in step (a).

### Process for the production of thermoplastic polyurethane

The present invention relates to a process, comprising the steps of:
(a) pelletizing recycled cast polyurethane to cast polyurethane pellets with an average size of 1 to 8 mm,
(b) heating the cast polyurethane pellets of step (a) and
(c) forming an article,
wherein the recycled cast polyurethane is the reaction product of a polyurethane prepolymer and a curative,
wherein the polyurethane prepolymer is the reaction product of the reaction of a diisocyanate and a polyol, and
wherein the curative is a polyol.

In a preferred embodiment, the cast polyurethane pellets of step (a) are mixed with thermoplastic polyurethanes to form a mixture, before the mixture is heated.

### Cleaning step

Optionally, the recycled cast polyurethane may be cleaned before use with conventional methods.

### Step (a) - Pelletizing

In step (a) recycled cast polyurethanes are pelletized to cast polyurethane pellets with an average size of 1 to 8 mm. In a preferred embodiment, the pellets have an average size of 2 to 4 mm. If the size of the pellets is too small, the handling of the pellets becomes difficult. If the size of the pellets is too large, a homogeneous mixing in the optional mixing step will be difficult.

### Mixing step

In an optional mixing step following step (a), thermoplastic polyurethane is mixed with the cast polyurethane pellets of step (a) to form a mixture. The mixing of the thermoplastic polyurethane with the cast polyurethane pellets is preferably performed using a mixing device.

### Step (b) - Heating

In step (b), the cast polyurethane pellets of step (a), or, optionally, the mixture of cast polyurethane pellets of step (a) with thermoplastic polyurethane, is heated, preferably to a temperature from 50 to 300°C and more preferably from 100 to 250°C.

The heating can be performed in an injection molding or extrusion process.

In one embodiment of the invention, the heating is done via reactive extrusion.

In another embodiment of the invention, the heating is done via batch extrusion.

### Step (c) - Forming an article

In step (c), the heated cast polyurethane pellets of step (b), or, optionally, the heated mixture of cast polyurethane pellets of step (a) with thermoplastic polyurethane, is formed to a thermoplastic polyurethane article. The term thermoplastic polyurethane article includes also pellets. The formation can be performed optionally at elevated temperatures and, optionally, at elevated pressure. The forming of a thermoplastic polyurethane article can be performed with an extruder or via injection molding.

The thermoplastic polyurethane article obtainable according to the process of the present invention comprises more than 0 to 100 wt% recycled cast polyurethane and 0 to less than 100 wt% virgin thermoplastic polyurethane.

The formed thermoplastic polyurethane article can be post-cured at various conditions, such as room temperature conditions or elevated temperature (e.g. 120°) for several hours (16-20 h).

The advantage of the process of the present invention is, that recycled CPU pellets can be introduced into a thermoplastic polyurethane stream to provide thermoplastic polyurethane. Thus, the CPU of the present invention are recyclable through processing as thermoplastic polyurethane.

### EXAMPLES

### Material:

- Virgin MDI CPU: 4,4'-MDI/PEAG polyurethane prepolymer (commercially available as Vibrathane® 8585 at LANXESS) cured with 1,4-BD at 100% stoichiometry
- Recycled MDI CPU: 4,4'-MDI/PEAG polyurethane prepolymer (commercially available as Vibrathane® 8585 at LANXESS) cured with 1,4-BD at 100% stoichiometry after use as star wheel in a recycling center (=post-consumer use)
- Virgin LF PPDI CPU: pPDI/polyether polyurethane prepolymer (commercially available as Adiprene® LFP E560 at LANXESS) cured with 1,4-BD at 100% stoichiometry
- Recycled LF PPDI CPU: pPDI/polyether polyurethane prepolymer (commercially available as Adiprene® LFP E560 at LANXESS) cured with 1,4-BD at 100% stoichiometry; casted and ground into chips
- HQEE: curative; hydroquinone bis (2-hydroxyethyl) ether; CAS Nr.: 104-38-1;
- 1,4-BD: curative; 1,4-butanediol, CAS-Nr.: 110-63-4;
- Virgin MDI TPU: MDI TPU; MDI/PCL polyurethane prepolymer cured with HQEE at 95% stoichiometry; remeltable; average pellet size: 5-6 mm (commercially available as Ultralast® MC900 at LANXESS)
- Virgin PPDI TPU: PPDI TPU; pPDI/PCL polyurethane prepolymer cured with 1,4-BD at 100% stoichiometry; remeltable; average pellet size: 5-6 mm (commercially available as Ultralast® PC931 at LANXESS)

### Methods:

### Hardness

The hardness of the polyurethane is measured according to ASTM D 2240.

### Tear

The split tear of the polyurethane is measured according to ASTM D-470. The trouser tear of the polyurethane is measured according to ASTM D-1938. The Die-C tear of the polyurethane is measured according to ASTM D-624.

### Rebound resilience

The rebound of the polyurethane is measured according to ASTM D 2632.

### Compression set

The compression set of the polyurethane is measured according to ASTM D 395 method B (22 hours at 70°C).

### Elongation

The elongation of the polyurethane is measured according to ASTM D 412.

### Process for providing a thermoplastic polyurethane (TPU)

### Step (a): Pelletizing

Recycled cast polyurethane based on 4,4'-MDI/PEAG polyurethane prepolymer cured with 1,4-BD is pelletized into pellets of 2.5 mm size.

### Mixing step

In some examples, cast polyurethane pellets are mixed in an 11 mm co-rotating twin-screw extruder (TSE) with thermoplastic polyurethane to form a mixture.

### Step (b): Heating & Step (c): Article forming

The cast polyurethane pellets or the mixture was heated in step (b) at a temperature of 50 to 300°C. For the 100% recycled CPU Van Dorn 55 ton (injection screw 22 mm diameter) was used which gives a ASTM D638 type I tensile bar (6.5" long, 3"thick).

For the 50:50 blends of recycled CPU mixed with virgin thermoplastic polyurethane, a BabyPlast injection molding machine with a 14 mm piston (no screw) was used to give ASTM D638 Type V tensile bar (2.5" long, 1/16" thick) and rectangular bar (2.5" long, 1/16" thick, ½" wide).

The properties of recycled CPU were compared to virgin cast polyurethane. Recycled CPU was pelletized to 2.5 mm (average pellet size) pellets and directly injection molded.

The produced thermoplastic polyurethane articles underwent a post cure treatment as described in detail in the following tables, which is either (i) an annealing at certain temperature for a certain time, or (ii) conditioning at room temperature (R.T.) for two weeks (unless stated otherwise).

**Table 1: Comparison of virgin MDI CPU and thermoplastic polyurethane made of recycled MDI CPU**

| **PU type** | Virgin MDI CPU | Recycled MDI CPU |
|---|---|---|
| **Prepolymer Type** | 4,4'-MDI/PEAG | 4,4'-MDI/PEAG |
| **Curative** | 1,4-BD | N/A |
| **Process used** | Casting at 115°C | Injection molding |
| **Post Cure** | 115°C/20h | none |
| **Hardness [Shore A]** | 85 | 81 |
| **10 % Modulus [MPa]** | 1.56 | 1.65 |
| **100 % Modulus [MPa]** | 5.86 | 5.02 |
| **300 % Modulus [MPa]** | 12.49 | 10.21 |
| **Elongation [%]** | 495 | 519 |
| **Peak Stress [MPa]** | 53.77 | 21.87 |
| **Rebound [%]** | 29 | 26 |

**Table 2: Comparison of thermoplastic polyurethane made of recycled cast polyurethane at different post-cure conditions**

| **PU type** | Recycled MDI CPU | Recycled MDI CPU |
|---|---|---|
| **Prepolymer Type** | 4,4'-MDI/PEAG | 4,4'-MDI/PEAG |
| **Curative** | N/A | N/A |
| **Process used** | Injection molding | Injection molding |
| **Post Cure** | R.T. | Anneal (115°C /16h) |
| **Hardness [Shore A]** | 82 | 76 |
| **10 % M [MPa]** | 1.77 | 1.17 |
| **100 % M [MPa]** | 5.43 | 4.77 |
| **300 % M [MPa]** | 10.18 | 10.65 |
| **Elongation [%]** | 522 | 568 |
| **Peak Stress [MPa]** | 21.13 | 18.54 |
| **Split Tear [N/m]** | 24167.5 | 20489.8 |
| **Rebound [%]** | 31 | 33 |

The thermoplastic polyurethane made of recycled MDI CPU has comparable physical properties as the virgin MDI CPU.

Virgin PPDI TPU (Ultralast® PC 931) was compared with recycled MDI CPU and blends of 50 wt% virgin PPDI TPU with 50 wt% recycled MDI CPU at different post cure conditions.

**Table 3: Comparison of virgin PPDI TPU and TPU made of recycled cast polyurethane**

| **Material** | Virgin PPDI TPU | | TPU/CPU blend* | | Recycled MDI CPU | Recycled MDI CPU |
|---|---|---|---|---|---|---|
| **Process used** | Injection molding | | Extruder and Injection molding | | Injection molding | Injection molding |
| **Injection molding conditions [°C]** | Rear: 230 | | Rear: 200 | | Rear: 225 | Rear: 225 |
| | Middle: 225 | | Middle: 195 | | Middle: 220 | Middle: 220 |
| | Nozzle: 220 | | Nozzle: 190 | | Nozzle: 215 | Nozzle: 215 |
| | Mold: 48 | | Mold: 43 | | Mold: 32 | Mold: 32 |

| **Post Cure** | R.T. | Anneal (120ºC/20h) | R.T. | Anneal (120ºC/20h) | R.T. | Anneal (115ºC/16h) |
|---|---|---|---|---|---|---|
| **Hardness [Shore A]** | 94 | 94 | 89 | 87 | 83 | 80 |
| **Modulus [MPa]** | 3.81 | 3.83 | 23.00 | 12.11 | 3.89 | 5.14 |
| **Strain at Break [%]** | 1558 | 1630 | 626 | 832 | 1146 | 953 |
| **Peak Stress [MPa]** | 55.33 | 55.37 | 25.33 | 32.05 | 35.65 | 30.16 |
| **Split Tear [N/m]** | 37827.4 | 37652.3 | 30121.8 | 30822. 3 | 25743.6 | |
| **Rebound [%]** | 61 | 61 | 44 | 45 | 30 | |

| | | | | | | |
|---|---|---|---|---|---|---|
| *50% Virgin PPDI TPU + 50% Recycled MDI CPU | | | | | | |

The thermoplastic polyurethane made of recycled MDI CPU has different physical properties as the virgin PPDI TPU.

Virgin MDI TPU (Ultralast® MC 900) was compared with recycled MDI CPU and blends of 50 wt% virgin MDI TPU with 50 wt% recycled MDI CPU at different post cure conditions.

**Table 4: Comparison of virgin MDI TPU and TPU made of recycled cast polyurethane**

| **Material** | Virgin MDI TPU | | TPU/CPU blend* | | Recycled MDI CPU | Recycled MDI CPU |
|---|---|---|---|---|---|---|
| **Process used** | Injection molding | | Extruder and Injection molding | | Injection molding | Injection molding |
| **Injection molding conditions [°C]** | Rear: 230 | | Rear: 200 | | Rear: 225 | Rear: 225 |
| | Middle: 225 | | Middle: 195 | | Middle: 220 | Middle: 220 |
| | Nozzle: 222 | | Nozzle: 190 | | Nozzle: 215 | Nozzle: 215 |
| | Mold: 45 | | Mold: 42 | | Mold: 32 | Mold: 32 |

| **Post Cure** | R.T. | Anneal (120ºC/20h) | R.T. | Anneal (120ºC/20h) | R.T. | Anneal (115ºC/16h) |
|---|---|---|---|---|---|---|
| **Hardness [Shore A]** | 89 | 88 | 85 | 83 | 83 | 80 |
| **Modulus [MPa]** | 10.21 | 15.28 | 17.17 | 8.74 | 3.89 | 5.14 |
| **Strain at Break [%]** | 1165 | 982 | 447 | 812 | 1146 | 953 |
| **Peak Stress [MPa]** | 30.65 | 22.68 | 19.70 | 29.81 | 35.65 | 30.16 |
| **Split Tear [N/m]** | 28895.9 | 29421.3 | 25043.1 | 30121.8 | 25743.6 | |
| **Rebound [%]** | 52 | 51 | 38 | 41 | 30 | |

| | | | | | | |
|---|---|---|---|---|---|---|
| *50% Virgin MDI TPU + 50% Recycled MDI CPU | | | | | | |

The TPU made of recycled MDI CPU has comparable physical properties as the virgin MDI TPU.

Virgin LF PPDI CPU was compared with TPU made of recycled LF PPDI CPU at different post cure conditions.

**Table 5: Comparison of virgin LF PPDI cast polyurethane and recycled LF PPDI cast polyurethane**

| **PU Type** | Virgin LF PPDI CPU | Recycled LF PPDI CPU | Recycled LF PPDI CPU | Recycled LF PPDI CPU |
|---|---|---|---|---|
| **Process used** | Casting at 115°C | Injection molding | Injection molding | Injection molding |
| **Post Cure** | Anneal (120°C/16h) | none | R.T. (10 days) | Anneal (120°C/6h) |
| **Hardness [Shore A]** | 97-98 | 96 | 96-97 | 96 |
| **10% M [MPa]** | 8.31 | 7.12 | 8.07 | 8.39 |
| **100% M [MPa]** | 13.46 | 11.92 | 12.40 | 12.80 |
| **300% M [MPa]** | 15.94 | 12.83 | 13.56 | 13.83 |
| **Elongation [%]** | 514 | 678 | 771 | 785 |
| **Split Tear [N/m]** | 15586.3 | 17687.8 | 46408.6 | 46233.5 |
| **Rebound [%]** | 63 | 64 | 67 | 64 |

The thermoplastic polyurethane made of recycled LF PPDI CPU has comparable physical properties as the virgin LF PPDI CPU.

The results demonstrate that recycled CPU can be reused in a process of the present invention to provide thermoplastic polyurethane with comparable physical parameters compared to virgin thermoplastic polyurethane or casted polyurethane.

## Claims

1. Process to provide a thermoplastic polyurethane (TPU), comprising the steps of:
(a) pelletizing recycled cast polyurethane to cast polyurethane pellets with an average size of 1 to 8 mm,
(b) heating the cast polyurethane pellets of step (a) and
(c) forming an article,
wherein the recycled cast polyurethane is the reaction product of a polyurethane prepolymer and a curative,
wherein the polyurethane prepolymer is the reaction product of the reaction of a diisocyanates and a polyol, and
wherein the curative is a polyol.

2. The process according to claim 1, wherein the cast polyurethane pellets of step (a) are mixed with thermoplastic polyurethane to form a mixture, before the heating step (b).

3. The process according to claim 1 or 2, wherein the recycled cast polyurethane is not a polyurethane foam.

4. The process according to any of claims 1 to 3, wherein the polyurethane prepolymer comprises an amount of free diisocyanate monomers of less than 1 wt%, preferably less than 0.5 wt% and more preferably less than 0.1 wt%, based on the total weight of the prepolymer.

5. The process according to any of claims 1 to 4, wherein the diisocyanate is selected from a group consisting of diphenylmethane diisocyanate, para-phenylene diisocyanate, toluene diisocyanate, hexamethylene diisocyanates, isophorone diisocyanate, xylene diisocyanate, and naphthalene diisocyanate, preferably selected from a group consisting of diphenylmethane diisocyanate, para-phenylene diisocyanate, toluene diisocyanate and hexamethylene diisocyanates and most preferably selected from a group consisting of diphenylmethane diisocyanate and para-phenylene diisocyanate.

6. The process according to any of claims 1 to 5, wherein the polyol of the polyurethane prepolymer is a combination of a diol and a triol.

7. The process according to any of claims 1 to 6, wherein the curative is a diol.

8. The process according to any of claims 2 to 7, wherein the thermoplastic polyurethane in the mixing step is based on the same or different diisocyanates as the recycled cast polyurethane in step (a).

9. The process according to any of claims 2 to 8, wherein the thermoplastic polyurethane in the mixing step is based on the same or different polyols as the recycled cast polyurethane in step (a).

10. The process according to any of claims 2 to 9, wherein the thermoplastic polyurethane in the mixing step is a virgin thermoplastic polyurethane.

11. The process according to any of claims 2 to 10, wherein the thermoplastic polyurethane in the mixing step is PPDI TPU or MDI TPU, preferably PPDI TPU.

12. The process according to any of claims 1 to 11, wherein the temperature in step (b) is from 50 to 300°C, preferably from 100 to 250°C.

13. The process according to any of claims 1 to 12, wherein the heating in step (b) is performed as injection molding or extrusion.

14. Thermoplastic polyurethane article obtainable according to the process of any of claims 1 to 17, comprising more than 0 to 100 wt% recycled cast polyurethane and 0 to less than 100 wt% virgin thermoplastic polyurethane.

15. Use of recycled cast polyurethane as used in any of the processes of the claims 1 to 13 for the production of thermoplastic polyurethane.
